Europäisches Patentamt

European Patent Office

Office européen des brevets

(19)

(11) Publication number: **0 161 031**
**B1**

## (12) EUROPEAN PATENT SPECIFICATION

(45) Date of publication of patent specification: **12.07.89**

(51) Int. Cl.⁴: **H 04 Q 3/495,** H 04 Q 11/04, H 04 M 3/54

(21) Application number: **85200645.1**

(22) Date of filing: **24.04.85**

(54) **Telecommunication system, in particular telephone system.**

(30) Priority: **07.05.84 NL 8401443**

(43) Date of publication of application:
**13.11.85 Bulletin 85/46**

(45) Publication of the grant of the patent:
**12.07.89 Bulletin 89/28**

(84) Designated Contracting States:
**BE DE FR GB IT NL SE**

(56) References cited:
**EP-A-0 073 078**

**INTERNATIONAL SWITCHING SYMPOSIUM, 21st-25th September 1981, Montreal, Canada, pages 33C-3-1 to 33C-3-7; S. HATTORI et al.: "EPBX for future integrated office system"**

(73) Proprietor: **N.V. Philips' Gloeilampenfabrieken**
**Groenewoudseweg 1**
**NL-5621 BA Eindhoven (NL)**

(72) Inventor: **Maat, Jan Philippus**
**c/o INT. OCTROOIBUREAU B.V. Prof. Holstlaan 6**
**NL-5656 AA Eindhoven (NL)**

(74) Representative: **Van Schaik, Johannes Wilhelmus et al**
**INTERNATIONAAL OCTROOIBUREAU B.V. Prof. Holstlaan 6**
**NL-5656 AA Eindhoven (NL)**

(56) References cited:
**FIFTH INTERNATIONAL CONFERENCE ON SOFTWARE ENGINEERING FOR TELECOMMUNICATION SWITCHING SYSTEMS, 4th-8th July 1983, Lund, Sweden, pages 184-189; J. SWERUP: "Software architecture in a digital voice/data PABX with distributed control"**

**PATENTS ABSTRACTS OF JAPAN, vol. 139, 17th November 1978, page 8573 E 78; & JP - A - 53 105 922**

Courier Press, Leamington Spa, England.

## Description

The invention relates to a telecommunication system, in particular a telephone system, comprising a plurality of intercoupled sub-systems, each sub-system comprising a switching system; at least one peripheral module, to which terminals, can be connceted via module communication lines; and a control unit possessing a list of the numbers belonging to the various sub-systems, and means to determine on the basis of this list of numbers and on the basis of a destination-terminal number provided by a source-terminal, being associated with a source-sub-system, to which destination sub-system the destination-terminal is associated.

Such a telecommunication system is described in J. Swerup, "Software architecture in a digital voice/data PABX with distributed control" in the conference publication of the "Fifth International Conference on software engineering for telecommunication switching systems" 4—8 July 1983, Lund, Sweden, pages 184—189.

In a telecommunication network of sub-systems found in industrial telephone exchanges the network is normally composed of independent sub-systems, each of which manages the variable (and semi-variable) permanent data of its own connections. It is often unavoidable that each data system must also comprise "global net data" such as routining data or data concerning presence or absence of teleprinters. Then consistency problems may occur when the network has to be approached as a whole by operational maintenance in order to change the data.

A further problem is that in distributing interrelated data about the sub-systems the data management becomes particularly complicated, for example, by relation variations. It may then also occur that data relating to connections have to be taken from various places, which gives rise to delays and, moreover, brings about a higher input/output activity of the control unit.

The invention has for its object to provide a telecommunication system of the kind set forth in the preamble by which an effective and economic data management is created in a simple manner. The telecommunication system is characterized by means to transmit to the control unit of the destination sub-system the necessary (signalling) information about identity and characteristics of the source-terminal and the destination-terminal, by means to establish a connection from the source-terminal to the destination sub-system and by means provided for in the control unit of the destination sub-system to analyze said information and, as the may be, to establish the connection to the destination-terminal.

When the destination-terminal is diverted (for example in the case of a diversion for non-response) the destination sub-system transfers in accordance with the invention, the information about the new destination-terminal to the control-unit of the sub-system to which the new destination is associated through the control-unit of the source subsystem.

It is advantageous when the sub-systems are coupled with multiplex lines, which include at least one channel for transferring information.

It is furthermore advantageous for said channel to be a 64 k bit/s common channel signalling channel inside a 2 M bit/s multiplex line.

Embodiments of the invention and their advantages will be set out with reference to the drawing, in which corresponding elements are designated by the same reference symbols. The drawing shows in

Fig. 1 a telecommunication system embodying the invention comprising three part systems,

Fig. 2 a block diagram of part of a telecommunication system for illustrating rousing a terminal in accordance with the invention,

Fig. 3 a block diagram of part of a telecommunication system for illustrating ringing when diverting a connection in accordance with the invention,

Fig. 4 a block diagram of part of a telecommunication system for illustrating the operator's handling of an outgoing connection in accordance with the invention and

Fig. 5 a block diagram of part of a telecommunication system for illustrating the operator's handling of an outgoing connection to a non-free terminal in accordance with the invention.

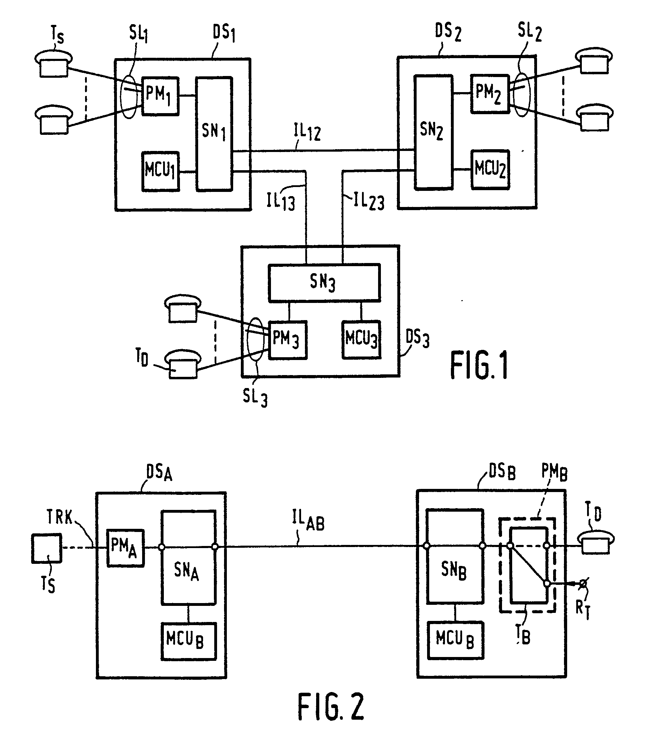

Fig. 1 shows a telecommunication system comprising three sub-systems $DS_1$, $DS_2$ and $DS_3$. The sub-systems are connected by intersystem-lines $IL_{12}$, $IL_{23}$ and $IL_{13}$. Each subsystem comprises a switching network SN and one or more peripheral modules PM serving to connect subscriber lines SL to the switching network SN concerned. Furthermore each sub-system comprises a control unit MCU, which is also connected to the switching network SN. To the subscriber lines may be connected a telephone set, a terminal, a graphical display unit or a different end apparatus. In accordance with the magnitude of the system the switching system may comprise a single T stage or a TST (in general a TnST) network.

The establishment of a connection between two terminals connected to the system takes place as follows. If a terminal $T_S$, the source terminal being connected to sub-system DS, desires a connection to terminal $T_D$ the destination terminal connected to sub-system $DS_3$, the desired connection of the source is announced—in a further conventional manner—through the peripheral module $PM_1$ to the switching network to the control-unit MCU of the subsystem $DS_1$. The characteristics and the identity of the source and the identity of the destination are investigated in the control-unit $MCU_1$. It is in particular assessed to which sub-system the destination is connected. For this purpose each control-unit has a list indicating which numbers are associated with which sub-systems. If it is found that the destination is lying in a different sub-system—in this example the destination is lying in sub-system $DS_3$—the control-unit $MCU_1$ of the first part system $DS_1$ transfers the required information about the identity and characteristics of source and destination to the processing unit of the sub-system with which the destination is associated ($MCU_3$). The transfer of this information is performed through the intersystem lines interconnecting the subsystems, in this example the intersystem line $IL_{13}$. In addition the connection between the source and the destination subsystem is passed on, which means that a path is created from terminal $T_S$ via peripheral modules $PM_1$, through switching network $SN_1$ and via intersystem line $IL_{13}$ to the switching network $SN_3$ of sub-system $S_3$. In sub-system $DS_3$ a connection is then established between the destination $T_D$ and the input concerned of the switching system $SN_3$. The establishment of this connection is in fact, for the sub-system $SN_3$ nothing else than the establishment of a connection between two parts (source and destination) connected, so to say, to the same sub-system, since the sub-system itself contains all information required for making the connection in its own sub-system and owing to the further switching of the source sub-system the source is, so to say, displaced to an input of the destination sub-system.

The intersystem lines may be multiplex lines having a transmission capacity of 2M bit/s, subdivided into 32 channels of 64 k bit/s each. One (or more) of these channels is (are) reserved for the transmission of the (signalling) information.

Although Fig. 1 shows three sub-systems, the invention is not limited thereto: it may be fewer or more than three systems. It is also possible for the intersystem lines to be formed by a bundle of two or more parallel lines. Moreover, complete meshing is not strictly necessary.

The idea of the invention will now be described more fully with reference to a few practical situations.

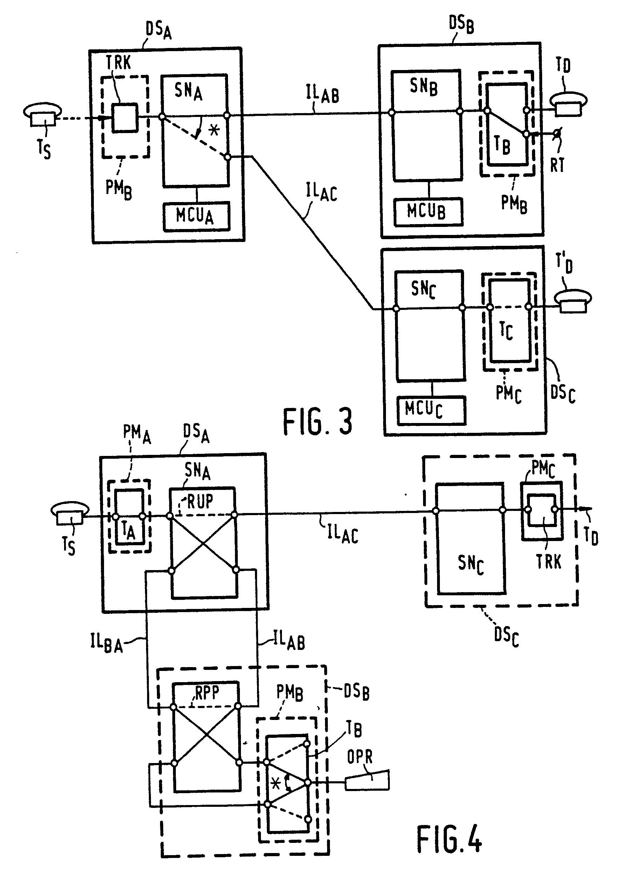

Fig. 2 shows the building-up phase on a trunk line TRK (connected to source terminal TS), which is connected through the peripheral module $PM_A$ of the sub-system $DS_A$, the switching system $SN_A$ and the intersystem line $IL_{AB}$ to the switching network of sub-system $DS_B$. After the control-unit $MCU_B$ of the sub-system $DS_B$ has assessed that the destination terminal $T_B$ is "free", the T stage forming part of the peripheral module of the sub-system $DS_B$ applies through an input RT a ringing tone to a source $T_S$. The destination gate itself provides the ringing note to the destination $T_D$. The response destination terminal $T_D$ is then the T stage of the peripheral module $PM_B$ and swithced on (indicated by broken lines in Fig. 3) so that at the same time the ringing tone for the two parties is interrupted.

If during ringing the destination terminal $T_D$ has to be changed over in the case of non-response to the destination terminal $T'_D$, which is associated with a different sub-system $DS_C$, a situation as illustrated in Fig. 3 occurs. Through input RT of T stage of peripheral module $PM_B$ the source terminal $T_S$ is uninterruptedly rung. The destination unit $MCU_B$ of sub-system $DS_B$ transmit the new location of the destination terminal $T'_D$ to the control-unit $MCU_A$ of the source system $DS_A$. This control-unit $MCU_A$ transfers through the intersystem line $IL_{AC}$ the (signalling) information to the sub-system with which the destination $T'_D$ is associated and then switches further connection. The sub-system $DS_C$ emits ringing current to destination terminal $T'_D$. When the destination terminal $T'_D$ responds, the replay signal is rapidly transferred to the sub-system $DS_A$, after which in the switching network of the source system $DS_A$ a change-over takes place to the connection indicated by broken line. In the T stage of the peripheral module $PM_C$ of the destination sub-system $DS_C$ the connection indicated by broken line is fixed. An advantage of this way of ringing is that the rhythm of the ringing tone for the source terminal $T_S$ remains unvaried, since the ringing tone continues emanating from the sub-system $DS_B$.

Fig. 4 illustrates the outgoing intervention by an operator. The terminal $T_S$ and the source sub-system $DS_A$ desire an outgoing (trunk) connection. In principle, the three parties concerned i.e. the source, the destination and the desired trunk may be located in three different sub-systems. Such a case is shown in Fig. 4. The control-unit of the sub-system $DS_A$, with which the terminal $T_S$ is associated, transmits in the manner described above the (signalling) information to the control-unit of the sub-system $DS_B$, with which the operator OPR is associated and the connection is switched on so that the operator can communicate with terminal $T_S$ through the T stage $T_A$ of the peripheral module $PM_A$ of the source sub-system $DS_A$, a path through switching system $SN_A$, the intersystem line $IL_{AB}$, a path through the switching system $SN_B$ of the sub-system with which the operator is associated, the T stage $T_B$ of said sub-system $SN_B$ and the operator. The operator will then establish a connection to an outgoing trunk line TRK through the source sub-system $DS_A$ to the sub-system $DS_C$ with which is associated the destination $T_D$, in other words there is not established a direct connection from sub-system $DS_B$ to sub-system $DS_C$. Consequently this connection is formed by a path through the T stage $T_B$ of the peripheral module $PM_B$, to which the operator is connected, by a path through switching system $SN_B$, the intersystem line $IL_{BA}$, a path through the switching system $SN_A$, the intersystem line $IL_{AC}$, a path through switching system $SN_C$ and finally through the trunk circuit TRK to the destination $T_D$. At a response by the destination the dotted connection RUP (reserved ultimate path) is made in the switching system $SN_A$ of the source sub-system $DS_A$. It is also possible to switch in two steps: at a response by the destination TUD first a dotted connection RPP (reserved provisional path) can be made in the operator sub-system $DS_B$ and only when the connection RUP in the source sub-system DS$_A$. An advantage of this manner of building up an outgoing connection is that the connections are made so that the final condition is as simple as possible. Moreover, a rapid reaction to the operator handling is thus ensured.

Although the Figure shows the two different intersystem lines between the sub-systems DS$_A$ and DS$_B$ (i.e. IL$_{AB}$ and IL$_{BA}$) this is not necessary: the connection may be formed either by two channels on one multiplex line or by one channel on such a line designed for two direction traffic. Moreover, as stated above, the intersystem lines include one ore more common channel signalling channels and a number, for example, 30 of communication channels.

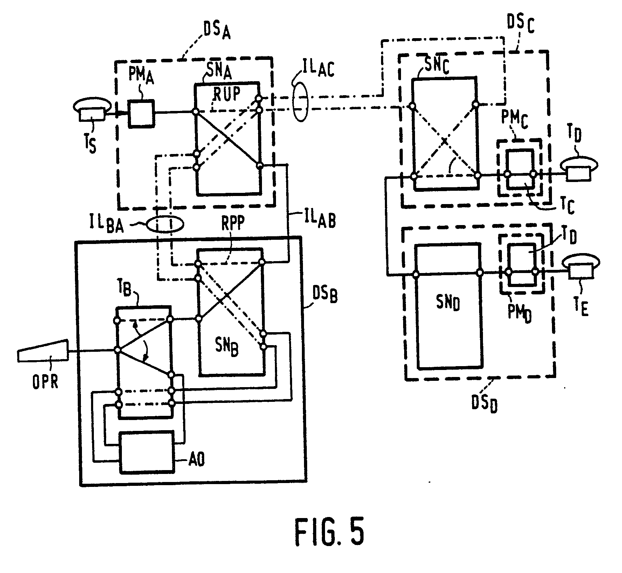

The Figure (Fig. 4 and also the Fig. 5 to be described hereinafter) does not show the control-unit forming part of each sub-system in order to avoid useless complication of the Figure. Each sub-system comprises such a control-unit connected in the manner described in Figs. 1 to 3.

Fig. 5 shows a situation as in Fig. 4, in which the destination T$_D$ is not "free", but communicates with a third terminal T$_E$ associated with a further sub-system DS$_D$. The connection is then built up as follows: First as described for Fig. 4 a connection is made between the sub-system DS$_A$ and the operator sub-system DS$_B$. Then the operator makes a connection both to the destination sub-system DS$_C$ and to the terminal associated with the sub-system communicating with the destination. For this purpose through a path in the T stage T$_B$ of the peripheral module PM$_B$, to which the operator is connected, the operator makes a connection to "add-on circuit AO". From the add-on circuit AO connections are made to the destination sub-system DS$_C$ and to the third sub-system DS$_C$ (not directly), however, both through the source sub-system DS$_A$. The connection of the operator to the destination sub-system is passed along T stage T$_B$, the switching system SN$_B$, the intersystem line IL$_{BA}$, the switching system SN$_A$, intersystem line IL$_{AC}$, switching system SN$_C$, T stage T$_C$ to the destination terminal T$_D$. The connection of the operator to the third sub-system is passed for a large part through the same route *i.e.* through T state T$_{B1}$, switching system SN$_{B1}$, intersystem line IL$_{BA1}$, switching system SN$_A$, intersystem line IL$_{AC1}$, switching system SN$_{C1}$, switching system SN$_D$, T stage T$_D$, a third terminal T$_E$. The operator then has the possibility to communicate simultaneously with the two terminals (T$_D$ and T$_E$) and with terminal T$_A$ separately. When the connection between terminals T$_D$ and T$_E$ is finished (connection P$_{DE}$ falls off) then in switching system SN$_A$, the source sub-system DS$_A$ the path RUP (indicated by dots) is connected further so that the connection between source and destination becomes established. It is also possible to attain this connection of source and destination in two phases *i.e.* by first in the switching system of the operator sub-system DS$_B$ the path RPP (indicated in dots) is made and only then the path RUP in switching system SN$_A$.

The advantage of this building manner is that the final condition of routining is as simple as possible.

It is obvious that the telecommunication system is suitable not only for transmitting call signals but also for carrying out also all kinds of data traffic.

## Claims

1. A telecommunication system, in particular a telephone system, comprising a plurality of inter-coupled sub-systems (DS$_1$, DS$_2$, DS$_3$), each sub-system comprising a switching system (SN$_1$, SN$_2$, SN$_3$); at least one peripheral module (PM$_1$, PM$_2$, PM$_3$), to which terminals (T$_s$, T$_d$), can be connected via module communication lines; and a control unit (MCU$_1$, MCU$_2$, MCU$_3$) possessing a list of the numbers belonging to the various sub-systems, and means to determine on the basis of this list of numbers and on the basis of a destination-terminal number (T$_d$) provided by a source-terminal (T$_s$), being associated with a source-subsystem (DS$_1$), to which destination sub-system (DS$_3$) the destination-terminal is associated, characterized by means to transmit to the control unit (MCU$_3$) of the destination sub-system (DS$_3$) the necessary (signalling) information about identity and characteristics of the source-terminal (T$_s$) and the destination-terminal (T$_d$), by means to establish a connection from the source-terminal (T$_s$) to the destination sub-system (DS$_3$) and by means provided for in the control unit (MCU$_3$) of the destination sub-system (DS$_3$) to analyze said information and, as the case may be, to establish the connection to the destination-terminal (T$_d$).

2. A telecommunication system as claimed in Claim 1, characterized in that when the destination-terminal is passed around by the destination sub-system (DS$_s$) to another destination-terminal (T$_d$), information about the new destination-terminal is transmitted to the control-unit (MCU$_c$) of the sub-system (DS$_c$) with which the new destination-terminal is associated through the control-unit (MCU$_a$) of the source sub-system (DS$_a$).

3. A telecommunication system as claimed in Claim 1 or 2, characterized in that the sub-systems (DS$_{1-3}$; DS$_{a-d}$) are coupled with multiplex lines (IL) including at least one channel for transmitting information.

4. A telecommunication system as claimed in Claim 3, characterized in that said channel is a 64 k bit/s common channel signalling channel inside a 2 M bit/s multiplex line.

5. A telecommunication system as claimed in anyone of the preceding Claims, characterized in that, in case of an outgoing intervention by an operator (OPR) that is connected to a sub-system (DS$_b$) differing from the source sub-system (DS$_a$), means are provided to make a first connection from the source sub-system (DS$_a$) to the operator sub-system (DS$_b$), a second conncetion from the operator sub-system (DS$_b$) through the source sub-system (DS$_a$) to the destination sub-system (DS$_c$) and, in the case of response by the destination-terminal ($T_d$), to make in the source subsystem ($DS_a$) a connection (RUP) between the source-terminal ($T_s$) to the destination terminal ($T_d$) by short-circuiting the source-terminal-to-operator connection and the operator-to-destination-terminal connection.

## Patentansprüche

1. Fernmeldesystem, insbesondere Fernsprechsystem mit einer Vielzahl untereinander gekoppelter Teilsysteme ($DS_1$, $DS_2$, $DS_3$), wobei jedes Teilsystem ein Schaltsystem ($SN_1$, $SN_2$, $SN_3$) aufweist, wenigstens einem Peripheriemodul ($PM_1$, $PM_2$, $PM_3$), mit dem über Modulkommunikationsleitungen Terminals ($T_s$, $T_d$) verbunden werden können, und einer Steuereinheit ($MCU_1$, $MCU_2$, $MCU_3$), die eine Liste der den jeweiligen Teilsysteme zugeordneter Nummern aufweist, sowie Mitteln zum auf Grund dieser Nummernliste und auf Grund einer Nummer des Bestimmungsterminals ($T_d$), die von einem, einem Quellenteilsystem ($DS_1$) zugeordneten Quellenterminal ($T_s$) erhalten worden ist, Ermitteln, welchem Bestimmungsteilsystem ($DS_3$) das Bestimmungsterminal zugeordnet ist, gekennzeichnet durch Mittel zum zu der Steuereinheit ($MCU_3$) des Bestimmungsteilsystems ($DS_3$) Übertragen der erforderlichen (Signalisierungs) Information betreffs der Identität und der Eigenschaften des Quellenterminals ($T_s$) und des Bestimmungsterminals ($T_d$), durch Mittel zum Herstellen einer Verbindung von dem Quellenterminal ($T_s$) zu dem Bestimmungsteilsystem ($DS_3$) und durch Mittel in der Steuereinheit ($MCU_3$) des Bestimmungsteilsystems ($DS_3$) zum Analysieren der genannten Information und ggf. zum Herstellen der Verbindung mit dem Bestimmungsterminal ($T_d$).

2. Fernmeldesystem nach Anspruch 1, dadurch gekennzeichnet, dass wenn das Bestimmungsterminal durch das Bestimmungsteilsystem ($DS_s$) zu einem anderen Bestimmungsterminal ($T_d$) umgangen wird, Information betreffs des neuen Bestimmungsterminals der Steuereinheit ($MCU_c$) des Teilsystems ($DS_c$) zugeführt wird, mit dem das neue Bestimmungsterminal über die Steuereinheit ($MCU_a$) des Quellenteilsystems ($DS_a$) gekoppelt ist.

3. Fernmeldesystem nach Anspruch 1 oder 2, dadurch gekennzeichnet, dass die Teilsysteme ($DS_{1-3}$; $DS_{a-d}$) mit Multiplexleitungen (IL) mit wenigstens einem Kanal zum Übertragen von Information gekoppelt sind.

4. Fernmeldesystem nach Anspruch 3, dadurch gekennzeichnet, dass der genannte Kanal ein 64 kBit/s ein Gemeinschaftskanal-Signalisierungskanal innerhalb einer 2 MBit/s Multiplexleitung ist.

5. Fernmeldesystem nach einem der vorstehenden Ansprüche, dadurch gekennzeichnet, dass im Falle eines ausgehenden Eingriffs durch eine bedienende Person (OPR), die mit einem Teilsystem ($DS_b$) in Verbindung steht, das anders ist als das Quellenteilsystems ($DS_a$), Mittel vorgesehen sind zum Herstellen einer ersten Verbindung von dem Quellenteilsystem ($DS_a$) zum dem Teilsystem ($DS_b$) der bedienenden Person, einer zweiten Verbindung von dem Teilsystem ($DS_b$) der bedienenden Person über das Quellenteilsystem ($DS_a$) zu dem Bestimmungsteilsystem ($DS_c$) und, im Falle einer von dem Bestimmungsterminal ($T_d$) herrührenden Antwort, Mittel zum in dem Quellenteilsystem ($DS_a$) Herstellen einer Verbindung (RUP) zwischen dem Quellenterminal ($T_s$) und dem Bestimmungsterminal ($T_d$), und zwar durch Kurzschluss der Quellenterminal-zu-Bedienungsperson-Verbindung und der Bedienungsperson-zu-Bestimmungsterminal-Verbindung.

## Revendications

1. Système de télécommunication, en particulier système téléphonique, comprenant plusieurs sous-systèmes ($DS_1$, $DS_2$, $DS_3$) interconnectés, chaque sous-système comprenant un système de commutation ($SN_1$, $SN_2$, $SN_3$); au moins un module périphérique ($PM_1$, $PM_2$, $PM_3$) auquel des terminaux ($T_S$, $T_D$) peuvent être connectés, par l'intermédiaire de lignes de communication de modules; et une unité de commande ($MCU_1$, $MCU_2$, $MCU_3$) possédant une liste des numéros appartenant aux divers sous-systèmes, ainsi que des moyens pour déterminer, sur la base de cette liste de numéros et sur la base d'un numéro de terminal de destination ($T_D$) fourni par un terminal de source ($T_S$) associé à un sous-système de source ($DS_1$), le sous-système de destination ($DS_3$) auquel le terminal de destination est associé, caractérisé par des moyens pour transmettre à l'unité de commande ($MCU_3$) du sous-système de destination ($DS_3$) l'information (de signalisation) nécessaire au sujet de l'identité et des caractéristiques du terminal de source ($T_S$) et du terminal de destination ($T_D$), par des moyens pour établir une connexion entre le terminal de source ($T_S$) et le sous-système de destination ($DS_3$) et par des moyens prévus dans l'unité de commande ($MCU_3$) du sous-système de destination ($DS_3$) pour analyser l'information et, suivant le cas, établir la connexion vers le terminal de destination ($T_D$).

2. Système de télécommunication suivant la revendication 1, caractérisé en ce que, lorsque le terminal de destination est contourné par le sous-système de destination ($DS_3$) au profit d'un autre terminal de destination ($T_D$), l'information au sujet du nouveau terminal de destination est transmise à l'unité de commande ($MCU_C$) du sous-système ($DS_C$) auquel le nouveau terminal de destination est associé par l'intermédiaire d'une unité de commande ($MCU_A$) du sous-système de source ($DS_A$).

3. Système de télécommunication suivant la revendication 1 ou 2, caractérisé en ce que les sous-systèmes ($DS_{1-3}$; $DS_{A-D}$) sont couplés par des lignes multiplex (IL) comprenant au moins un canal pour transmettre de l'information.

4. Systèm de télécommunication suivant la revendication 3, caractérisé en ce que le canal est un canal de signalisation à canal commun de 64 kbit/s à l'intérieur d'une ligne multiplex de 2 Mbits/s.

5. Système de télécommunication suivant l'une quelconque des revendications précédentes, caractérisé en ce que, dans le cas d'une intervention de sortie effectuée par un opérateur (OPR), qui est connecté à un sous-système (DS_B) différent du sous-système de source (DS_A), des moyens sont prévus pour établir une première connexion depuis le sous-système de source (DS_A) au sous-système d'opérateur (DS_B), une deuxième connexion depuis le sous-système d'opérateur (DS_B) par le sous-système de source (DS_A) au sous-système de destination (DS_C) et pour, dans le cas d'une réponse par le terminal de destination (T_D) établir, dans le sous-système de source (DS_A), une connexion (RUP) entre le terminal de source (T_S) et le terminal de destination (T_D) par court-circuitage de la connexion entre le terminal de source et l'opérateur et de la connexion entre l'opérateur et le terminal de destination.

FIG.1

FIG.2

FIG. 3

FIG.4

2

FIG. 5